# EUROPÄISCHE PATENTSCHRIFT

(11) **EP 1 264 104 B1**
(45) Veröffentlichungstag und Bekanntmachung des Hinweises auf die Patenterteilung: **26.08.2009**
(21) Anmeldenummer: 00991116.5
(22) Anmeldetag: 27.12.2000
(51) Int. Cl.: F02P 5/15

(54) **VERFAHREN ZUM BETREIBEN EINES OTTO-VERBRENNUNGSMOTORS MIT KRAFTSTOFFEINSPRITZUNG BEI EINEM KALTSTART**
METHOD FOR OPERATING AN OTTO-CYCLE INTERNAL COMBUSTION ENGINE WITH FUEL INJECTION ON A COLD START
PROCEDE D'UTILISATION D'UN MOTEUR A CYCLE OTTO AVEC INJECTION DE CARBURANT LORS D'UN DEMARRAGE A FROID

(30) Priorität: 31.12.1999 DE 19963914
(43) Veröffentlichungstag der Anmeldung: 11.12.2002
(73) Patentinhaber: ROBERT BOSCH GMBH, 70442 Stuttgart (DE)
(72) Erfinder: JOOS, Klaus, 74399 Walheim (DE); DAEUBEL, Ralf, 71706 Markgroeningen (DE); GRASS, Gerd, 71701 Schwieberdingen (DE); WEISS, Ruediger, 71159 Moetzingen (DE); BOCHUM, Hansjoerg, 48377 Novi (US); SCHAUT, Edmund, 71292 Friolzheim (DE)
(86) Internationale Anmeldenummer: PCT/DE2000/004633
(87) Internationale Veröffentlichungsnummer: WO 2001/050015

(56) Entgegenhaltungen:
- US-A- 4 982 712
- US-A- 5 050 551
- US-A- 5 357 928
- US-A- 5 497 745
- PATENT ABSTRACTS OF JAPAN vol. 2000, no. 01, 31. Januar 2000 (2000-01-31) & JP 11 280532 A (MAZDA MOTOR CORP), 12. Oktober 1999 (1999-10-12)

## Beschreibung

Die Erfindung betrifft ein Verfahren zum Betreiben eines Otto-Verbrennungsmotors mit Kraftstoffeinspritzung bei einem Kaltstart, entsprechend dem einleitenden Teil des Anspruchs 1.

Verfahren zur Einspritzung von Kraftstoff und Veränderung des Zündwinkels bei einem Start einer Brennkraftmaschine sind bereits aus der US5357928, US4982712, US5050551, US5497745 und JP11280532 bekannt.

Zum Starten eines Otto-Verbrennungsmotors mit Kraftstoffdirekteinspritzung wird mittels einer Elektrokraftstoffpumpe ein Vordruck beispielsweise von ca. 4 bar aufgebaut. Dabei ist die Kraftstoffeinspritzung selbst durch ein Winkelfenster begrenzt, dessen Beginn normalerweise durch den Öffnungszeitpunkt eines Einlassventils vorgegeben ist und dessen Ende durch den jeweils sich im Zylinder einstellenden Brennraumdruck bestimmt wird. Da sich der Druck im Brennraum während einer Kompressionsphase erhöht und ab einer bestimmten Kolbenstellung den mittels der Elektrokraftstoffpumpe aufgebauten Vordruck übersteigt, muss die Kraftstoffeinspritzung beendet werden, wenn der Druck im Brennraum eine bestimmte Druckschwelle überschreitet. Anderenfalls würde unkorrekterweise Luft aus dem Brennraum in das Einlassventil geblasen werden, so dass bei der darauffolgenden Einspritzung anstelle von Kraftstoff diese Luft durch das Einlassventil in den Brennraum eingespritzt werden würde. Hierdurch würde es nachteilhafterweise zu Verbrennungsaussetzern in den entsprechenden Zylindern kommen.

Der Beginn und das Ende einer durch ein Winkelfenster begrenzten Kraftstoffeinspritzung sind folglich durch eine bestimmte Drehwinkelposition der Kurbelwelle festgelegt, wobei die jeweilige Drehwinkelposition zu Einspritzbeginn und zu Einspritzende einen entsprechenden, variablen Kurbeldrehwinkel einschließen. Das Zeitintervall, während dessen dieser Kurbeldrehwinkel durchlaufen wird, hängt proportional von der Drehzahl des Verbrennungsmotors ab.

Bei einem Kaltstart des Verbrennungsmotors werden zumindest für die ersten Verbrennungen sehr lange Einspritzzeiten benötigt. Der durch die ersten zwei Einspritzungen bei sehr langen Einspritzzeiten in den Brennraum gelangende Kraftstoff kommt zur Verbrennung und verursacht einen deutlichen Drehzahlanstieg. Aufgrund des verhältnismäßig großen Drehzahlanstiegs steht für die folgende dritte und vierte Einspritzung nicht mehr genügend Einspritzzeit zur Verfügung, um eine zur Verbrennung ausreichende Kraftstoffmenge mittels des Einlassventils (Einspritzventil) in den Brennraum einspritzen zu können. Dies führt zu unerwünschten Verbrennungsaussetzern bei der dritten und vierten Einspritzung während des Kaltstarts.

Zur Vermeidung dieser unerwünschten Verbrennungsaussetzer während des Kaltstarts ist es bekannt, ein zusätzliches Einspritzventil (Kaltstartventil) vorzusehen, das im Saugrohr des Verbrennungsmotors positioniert ist und gleichzeitig mit dem Einlassventil während des Kaltstarts zusätzlich Kraftstoff in den Verbrennungsraum einspritzt. Das Bereitstellen eines zusätzlichen Kaltstartventils ist verhältnismäßig kompliziert und aufwendig.

### Vorteile der Erfindung

Das erfindungsgemäße Verfahren richtet sich auf den Start eines Ottomotors wobei in der Kaltstartphase eine so große Menge an Kraftstoff in den mindestens einen Zylinder eingespritzt wird, dass bei einer erhöhten Drehzahl die für die Einspritzung zur Verfügung stehende Zeit nicht ausreicht. In der Kaltstartphase wird der Zündwinkel so weit in Richtung Spätverstellung (13) verstellt, dass die Drehzahl des Ottomotors auf einen Wert begrenzt bleibt der für die Einspritzung während der Kaltstartphase ausreichend ist. Nach der Kaltstartphase erfolgt eine Normalstellung (14) des Zündwinkels.

Da der Zündwinkel wenigstens bei der ersten Verbrennung in wenigstens einem Zylinder möglichst späteingestellt wird, wird der in den Brennraum eingespritzte Kraftstoff, beziehungsweise das Kraftstoff-Luft-Gemisch, bei der jeweiligen Zündung verbrannt, wobei vorteilhafterweise durch diese Verbrennung ein sehr kleines Moment erzeugt wird. Dadurch ergibt sich bei der ersten Verbrennung mit spätem Zündwinkel ein sehr geringer Drehzahlanstieg, so dass auch für die weitere, direkt nachfolgende Einspritzung noch genügend Einspritzzeit zur Verfügung steht, um zu einer sicheren Verbrennung ausreichend viel Kraftstoff in den Brennraum einspritzen zu können. Dabei ist ferner zu berücksichtigen, dass bereits nach der ersten Verbrennung der Brennraum so weit erwärmt ist, dass zur Sicherstellung einer nächstfolgenden Verbrennung deutlich weniger Kraftstoff in den Brennraum eingespritzt werden muss. Somit ergibt sich vorteilhafterweise aufgrund einer Zündwinkel-Spätverstellung für wenigstens die jeweils erste Verbrennung in einem entsprechenden Zylinder während eines Kaltstarts eine Erwärmung des Brennraums unter Ausbildung eines stark reduzierten Drehzahlanstiegs des Verbrennungsmotors. In dieser Weise wird für die jeweils nächstfolgende Einspritzung eine erfolgreiche Verbrennung gewährleistet, da aufgrund der Brennraumerwärmung durch die erste Verbrennung weniger einzuspritzender Kraftstoff für die folgende Verbrennung notwendig ist, wobei gleichzeitig durch den verhältnismäßig geringen Drehzahlanstieg während der ersten Verbrennung mehr Einspritzzeit zum Einspritzen von Kraftstoff in den (erwärmten) Brennraum zur Verfügung steht. Es werden somit in einfacher und zuverlässiger Weise Verbrennungsaussetzer während des Kaltstartens des Verbrennungsmotors vermieden beziehungsweise verringert.

Vorzugsweise umfasst die Kaltstartphase eine Mehrzahl von Verbrennungen. Aufgrund des sehr niedrigen Drehzahlanstiegs bei den ersten Verbrennungen mit sehr spätem Zündwinkel ist die Zündwinkel-Spätverstellung nicht auf die erste Verbrennung während des Kaltstarts beschränkt, sondern kann zur Erzielung einer effektiven Brennraumerwärmung und zur Optimierung weiterer Kaltstartparameter auf eine gewünschte, optimale Anzahl von Verbrennungen ausgedehnt werden.

Mit Vorteil erfolgt die Normalstellung in einem einzigen Schritt zur Einstellung eines gewünschten Leistungsbetriebswerts. Dies ermöglicht nach Beendigung der Kaltstartphase einen schnellen Wechsel von Spätzündwinkeln zu geeigneten Normalzündwinkeln, bei welchen ein erhöhter beziehungsweise maximal möglicher Zündwinkel-Wirkungsgrad erzielbar ist.

Vorteilhafterweise erfolgt die Normalstellung in mehreren Übergangsschritten zur Einstellung eines gewünschten Leistungsbetriebswerts. Zur Vermeidung einer zu großen Zündwinkelveränderung kann die Normalstellung zur Beendigung der Kaltstartphase auch in mehreren Übergangsschritten erfolgen, bis der gewünschte Normalzündwinkel zur Ausnutzung eines möglichst großen Zündwinkel-Wirkungsgrads eingestellt ist.

Gemäß einer bevorzugten Ausführungsvariante wird der Kaltstartwert zylinder-individuell eingestellt. Da das Kaltstartverhalten der jeweiligen Zylinder eines Verbrennungsmotors unterschiedlich sein kann, ist es vorteilhaft, einen jeweils notwendigen Kaltstartwert zylinder-individuell zu berechnen und einzustellen, um eine effektive Vermeidung von Verbrennungsaussetzern während des Kaltstarts des Verbrennungsmotors zu gewährleisten bei gleichzeitig maximal möglichem Zündwinkel-Wirkungsgrad.

Vorzugsweise wird der Kaltstartwert während der Kaltstartphase jeweils für die nächstfolgende Verbrennung eines entsprechenden Zylinders eingestellt. Da während der Kaltstartphase mit jeder Verbrennung eine zunehmende Brennraumerwärmung erzielt wird, ist es vorteilhaft, für jede einzelne Verbrennung einen spezifischen Kaltstartwert zylinder-individuell zu berechnen und einzustellen. In dieser Weise wird die Spätverstellung des Zündwinkels während der Kaltstartphase möglichst gering gehalten, so dass auch während der Kaltstartphase vorteilhafterweise ein optimierter Zündwinkel-Wirkungsgrad erzielbar ist.

Mit Vorteil erfolgt die Einstellung des Kaltstartwerts mittels einer an die Betriebstemperatur des jeweiligen Zylinders angepassten Spätverstellung. In dieser Weise kann der Kaltstartwert des Zündwinkels auf einem möglichst niedrigen Niveau gehalten werden, um einen optimalen Zündwinkel-Wirkungsgrad zu erzielen unter zuverlässiger Vermeidung von Verbrennungsaussetzern während der Kaltstartphase.

Vorteilhafterweise erfolgt die Spätverstellung unter der Bedingung, dass die Anzahl der Zündungen kleiner oder gleich dem Wert eines Parameters ist, welcher definitionsgemäss grösser oder gleich eins und kleiner oder gleich der Zylinderanzahl des Verbrennungsmotors ist, und dass gleichzeitig die Brennraumtemperatur vor der ersten Zündung kleiner als eine Temperaturschwelle ist. Hierdurch kann die Spätverstellung während der Kaltstartphase beispielsweise in Form einer Alternativabfrage auf eine definierte Anzahl von Zündungen beschränkt werden. Dabei kann die Brennraumtemperatur vor der ersten Zündung wenigstens näherungsweise durch die Kühlwassertemperatur, die Öltemperatur und/oder die Ansauglufttemperatur des Verbrennungsmotors bestimmt werden. Die Temperaturschwelle kann beispielsweise ungefähr 0°C betragen.

Weitere vorteilhafte Ausgestaltungen der Erfindung ergeben sich aus der Beschreibung.

### Zeichnungen

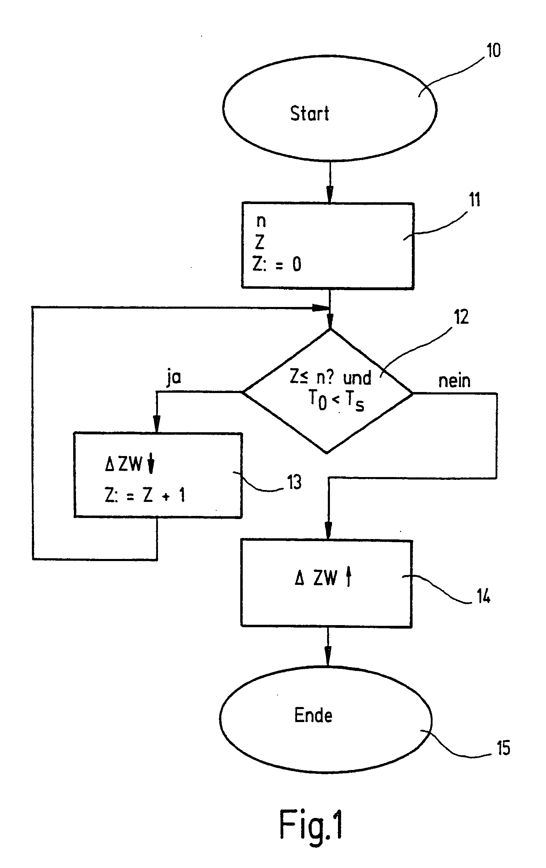

Die Erfindung wird nachfolgend in einer Ausführungsvariante anhand einer zugehörigen Zeichnung näher erläutert. Dabei zeigt Figur 1 als einzige Figur ein Blockschaltbild einer Kaltstart-Zündwinkelverstellung.

### Beschreibung der Erfindung

Figur 1 zeigt ein Blockschaltbild einer Kaltstart-Zündwinkelverstellung, wobei die folgenden Definitionen gelten:
- Block 10 =: Start der Kaltstart-Zündwinkelverstellung;
- Block 11 =: Parametererfassung mit den Parametern,
n = frei applizierbare Zahl mit 1 ≤ n ≤ Zylinderzahl,
z = Anzahl der Zündungen;
- Block 12 =: Alternativabfrage;
- Block 13 =: Zündwinkel-Spätverstellung ΔZW↓;
- Block 14 =: Zündwinkel-Normalstellung ΔZW↑;
- Block 15 =: Ende der Kaltstart-Zündwinkelverstellung.

Beim Start des Verbrennungsmotors (Block 10) wird die Kaltstart-Zündwinkelverstellung automatisch gestartet, wobei als Parameter (Block 11) die mit n bezeichnete, frei applizierbare Zahl (beispielsweise 1 ≤ n ≤ Zylinderanzahl des Verbrennungsmotors) und die mit z bezeichnete Anzahl der Zündungen definiert sind. Diese Parameter n und z werden durch geeignete Mittel ermittelt werden. Dabei weist z vor der ersten Zündung den Wert 0 auf. Beim Kaltstarten des Verbrennungsmotors erfolgt automatisch eine Alternativabfrage (Block 12), ob die Anzahl der Zündungen z kleiner oder gleich der Anzahl der Zylinder n des Verbrennungsmotors ist (z ≤ n ?) und ob gleichzeitig die Brennraumtemperatur To im Zylinder vor der ersten Zündung kleiner als eine Temperaturschwelle Ts ist (To < Ts ?). Wenn dies der Fall ist, das heißt wenn beide Bedingungen gleichzeitig erfüllt sind und die Alternativabfrage mit ja beantwortet wird, wird eine Zündwinkel-Spätverstellung (Block 13) für die nächstfolgende Zündung z+1 aktiviert. Dabei wird die Alternativabfrage (Block 12) so lange wiederholt, bis die Anzahl der Zündungen z größer als die Zahl des Parameters n ist. Ab diesem Betriebszeitpunkt wird somit die Alternativabfrage (Block 12) mit nein beantwortet, so dass die bisher aktivierte Zündwinkel-Spätverstellung (Block 13 bei z ≤ n) mittels einer geeigneten Zündwinkel-Frühverstellung (Block 14) aufgehoben wird. Nach dieser Zündwinkel-Normalstellung (Block 14) wird die Kaltstart-Zündwinkelverstellung beendet (Block 15).

Bei diesem Ausführungsbeispiel gemäß Figur 1 erfolgt das Spätverstellen des Zündwinkels auf einen Kaltstartwert für eine Anzahl von Zündungen z, welche der Zahl des Parameters n entspricht. Aufgrund dieser Zündwinkel-Spätverstellung wird gewährleistet, dass während der gesamten Kaltstartphase der jeweils in den Zylinder eingespritzte Kraftstoff, beziehungsweise das Kraftstoff-Luft-Gemisch, zur Verbrennung gebracht wird. Da der Zündwinkel bei den ersten Verbrennungen spätverstellt ist, wird während des Kaltstarts nahezu kein Moment erzeugt, so dass der Drehzahlanstieg vorteilhafterweise sehr gering ausfällt. Dadurch steht für alle Einspritzungen während der Kaltstartphase, und insbesondere für die zweite bis letzte Einspritzung (z > 1 bis z = n), verhältnismäßig viel Zeit zur Verfügung, um eine für eine erfolgreiche Verbrennung ausreichende Menge an Kraftstoff beziehungsweise an Kraftstoff-Luft-Gemisch in den jeweiligen Zylinder einspritzen zu können. Es werden somit mittels der Zündwinkel-Spätverstellung nachteilhafte Verbrennungsaussetzer während der Kaltstartphase in zuverlässiger Weise verhindert beziehungsweise verringert.

Ferner erfolgt durch die ersten Verbrennungen im jeweiligen Zylinder eine vorteilhafte Brennraumerwärmung, aufgrund welcher zur Gewährleistung einer sicheren Verbrennung der Bedarf an in den jeweiligen Zylinder einzuspritzenden Kraftstoff, beziehungsweise an Kraftstoff-Luft-Gemisch, im Vergleich zu einem kälteren Brennraum für die nächstfolgende Zündung reduziert ist. Dies bedeutet, dass der Zündwinkel mit zunehmender Brennraumerwärmung aufgrund der ersten Verbrennungen während einer Kaltstartphase weniger spätverstellt werden muss, um gleichzeitig während der gesamten Kaltstartphase eine erfolgreiche Verbrennung des eingespritzten Kraftstoffs beziehungsweise des Kraftstoff-Luft-Gemischs zu gewährleisten. In dieser Weise kann der Zündwinkel-Wirkungsgrad während der Kaltstartphase eines Verbrennungsmotors optimiert werden, da für jede Zündung in der Kaltstartphase lediglich die gerade notwendige Zündwinkel-Spätverstellung erfolgt, welche zu einer erfolgreichen Verbrennung bei allen Zündungen während der Kaltstartphase und somit zur Vermeidung von Verbrennungsaussetzern notwendig ist.

Nach einer bestimmten und jeweils einstellbaren Anzahl von Zündungen z erfolgt eine Zündwinkel-Normalstellung, um die Kaltstartphase auf eine möglichst geringe Anzahl von Zündungen zu begrenzen und somit den Verbrennungsmotor so schnell wie möglich mit einem hohen Zündwinkel-Wirkungsgrad bei möglichst großen Zündwinkeln (früher Zündzeitpunkt) zu betreiben. Dabei sollte die Zündwinkel-Spätverstellung vorzugsweise die erste Zündung während des Kaltstarts eines Zylinders des Verbrennungsmotors erfassen, um die Startdauer möglichst gering zu halten. Ferner ist es möglich, beim Übergang von der Zündwinkel-Spätverstellung auf die Zündwinkel-Normalstellung mehrere Übergangsschritte mit zunehmender Zündwinkel-Frühverstellung vorzusehen. Der jeweils optimale, spätverstellte Zündwinkelwert (Kaltstartwert) kann individuell für jeden Zylinder des Verbrennungsmotors berechnet und eingestellt werden.

## Patentansprüche

1. Verfahren zum Betreiben eines Ottomotors mit Kraftstoffeinspritzung direkt in mindestens einen zylinder, wobei eine Kaltstartphase vorgesehen ist,
**dadurch gekennzeichnet,**
**dass** in der Kaltstartphase eine so große Menge an Kraftstoff in den mindestens einen Zylinder eingespritzt wird, dass bei einer erhöhten Drehzahl die für die Einspritzung zur Verfügung stehende Zeit nicht ausreicht,
und **dass** in der Kaltstartphase der Zundwinkel so weit in Richtung Spätverstellung (13) verstellt wird, dass die Drehzahl des Ottomotors auf einen Wert begrenzt bleibt der für die Einspritzung während der Kaltstartphase ausreichend ist,
und **dass** nach der Kaltstartphase eine Normalstellung (14) des Zündwinkels erfolgt.

2. Verfahren nach Anspruch 1, **dadurch gekennzeichnet, dass** die Kaltstartphase eine Mehrzahl von Verbrennungen umfasst.

3. Verfahren nach einem der vorhergehenden Ansprüche, **dadurch gekennzeichnet, dass** die Normalstellung (14) in einem einzigen Schritt zur Einstellung eines gewünschten Leistungsbetriebswerts erfolgt.

4. Verfahren nach einem der vorhergehenden Ansprüche, **dadurch gekennzeichnet, dass** die Normalstellung (14) in mehreren Übergangsschritten zur Einstellung eines gewünschten Leistungsbetriebswerts erfolgt.

5. Verfahren nach einem der vorhergehenden Ansprüche, **dadurch gekennzeichnet, dass** der Kaltstartwert zylinder-individuell eingestellt wird.

6. Verfahren nach einem der vorhergehenden Ansprüche, **dadurch gekennzeichnet, dass** der Kaltstartwert während der Kaltstartphase jeweils für die nächstfolgende Verbrennung eines entsprechenden Zylinders eingestellt wird.

7. Verfahren nach einem der vorhergehenden Ansprüche, **dadurch gekennzeichnet, dass** die Einstellung des Kaltstartwerts mittels einer an die Betriebstemperatur des jeweiligen Zylinders angepassten Spätverstellung (13) erfolgt.

8. Verfahren nach einem der vorhergehenden Ansprüche, **dadurch gekennzeichnet, dass** die Spätverstellung (13) unter der Bedingung erfolgt, dass die Anzahl der Zündungen (z) kleiner oder gleich dem Wert eines Parameters (n) ist, welcher definitionsgemäss grösser oder gleich eins und kleiner oder gleich der Zylinderanzahl des Verbrennungsmotors ist, und dass gleichzeitig die Brennraumtemperatur (To) vor der ersten Zündung kleiner als eine Temperaturschwelle (Ts) ist.

## Claims

1. Method for operating an Otto-cycle engine with fuel injection directly into at least one cylinder, with a cold start phase being provided,
**characterized**
**in that**, in the cold start phase, a quantity of fuel is injected into the at least one cylinder, which quantity is of such a magnitude that, at an increased rotational speed, the time available for the injection is insufficient,
and **in that**, in the cold start phase, the ignition angle is adjusted in the direction of a late adjustment (13) to such an extent that the rotational speed of the Otto-cycle engine remains limited to a value which is sufficient for the injection during the cold start phase,
and **in that**, after the cold start phase, a normal adjustment (14) of the ignition angle takes place.

2. Method according to Claim 1, **characterized in that** the cold start phase comprises a multiplicity of combustions.

3. Method according to one of the preceding claims, **characterized in that** the normal adjustment (14) takes place in a single step to set a desired operation performance value.

4. Method according to one of the preceding claims, **characterized in that** the normal adjustment (14) takes place in a plurality of transition steps to set a desired operation performance value.

5. Method according to one of the preceding claims, **characterized in that** the cold start value is set in a cylinder-specific manner.

6. Method according to one of the preceding claims, **characterized in that,** during the cold start phase, the cold start value is set in each case for the subsequent combustion of a corresponding cylinder.

7. Method according to one of the preceding claims, **characterized in that** the setting of the cold start value takes place by means of a late adjustment (13) which is adapted to the operating temperature of the respective cylinder.

8. Method according to one of the preceding claims, **characterized in that** the late adjustment (13) takes place on the condition that the number of ignitions (z) is less than or equal to the value of a parameter (n) which, by definition, is greater than or equal to 1 and less than or equal to the number of cylinders of the internal combustion engine, and that, at the same time, the combustion chamber temperature (To) before the first ignition is lower than a temperature threshold (Ts).

## Revendications

1. Procédé pour faire fonctionner un moteur Otto à injection de carburant directement dans au moins un cylindre, dans lequel il est prévu une phase de démarrage à froid,
**caractérisé en ce que**
dans la phase de démarrage à froid, on injecte dans l'au moins un cylindre une quantité de carburant telle que le temps disponible pour l'injection ne suffise pas dans le cas d'un régime accru,
et **en ce que** dans la phase de démarrage à froid, l'angle d'allumage est réglé dans le sens d'un retard à l'allumage (13) tel que le régime du moteur Otto reste limité à une valeur qui est suffisante pour l'injection pendant la phase de démarrage à froid,
et **en ce qu'**après la phase de démarrage à froid, une position normale (4) de l'angle d'allumage est rétablie.

2. Procédé selon la revendication 1**, caractérisé en ce que** la phase de démarrage à froid comprend une pluralité de combustions.

3. Procédé selon l'une quelconque des revendications précédentes, **caractérisé en ce que** la position normale (14) est établie dans une étape unique pour l'ajustement d'une valeur fonctionnelle de puissance souhaitée.

4. Procédé selon l'une quelconque des revendications précédentes, **caractérisé en ce que** la position normale (14) est établie en plusieurs étapes de transition pour l'ajustement d'une valeur fonctionnelle de puissance souhaitée.

5. Procédé selon l'une quelconque des revendications précédentes, **caractérisé en ce que** la valeur de démarrage à froid est ajustée individuellement pour chaque cylindre.

6. Procédé selon l'une quelconque des revendications précédentes, **caractérisé en ce que** la valeur de démarrage à froid est ajustée pendant la phase de démarrage à froid à chaque fois pour la combustion immédiatement suivante d'un cylindre respectif.

7. Procédé selon l'une quelconque des revendications précédentes, **caractérisé en ce que** l'ajustement de la valeur de démarrage à froid est effectué au moyen d'un réglage de retard à l'allumage (13) adapté à la température de fonctionnement du cylindre respectif.

8. Procédé selon l'une quelconque des revendications précédentes, **caractérisé en ce que** le réglage de retard à l'allumage (13) s'effectue à la condition que le nombre d'allumages (z) soit inférieur ou égal à la valeur d'un paramètre (n) qui, par définition, est supérieur ou égal à un et qui est inférieur ou égal au nombre de cylindres du moteur à combustion interne, et que simultanément la température de la chambre de combustion (To) avant le premier allumage soit inférieure à un seuil de température (Ts).
